# EUROPEAN PATENT SPECIFICATION

(11) **EP 3 350 437 B1**
(45) Date of publication and mention of the grant of the patent: **01.07.2020**
(21) Application number: 15810707.8
(22) Date of filing: 11.11.2015
(51) Int. Cl.: F03B 13/18, F03B 13/20

(54) **WAVE ENERGY CONVERSION DEVICE**
WELLENENERGIEUMWANDLUNGSVORRICHTUNG
DISPOSITIF DE CONVERSION DE L'ÉNERGIE DES VAGUES

(30) Priority: 14.09.2015 MD 20150087
(43) Date of publication of application: 25.07.2018
(73) Proprietor: Pancenco, Vitalie, Stefan Voda 4201 (MD); Pancenco, Iulian, Stefan Voda 4201 (MD)
(72) Inventor: Pancenco, Vitalie, Stefan Voda 4201 (MD); Pancenco, Iulian, Stefan Voda 4201 (MD)
(74) Representative: Baldi, Claudio
(86) International application number: PCT/MD2015/000006
(87) International publication number: WO 2017/048113

(56) References cited:
- GB-A- 2 384 031
- US-A- 3 961 863
- US-A- 4 036 563

## Description

The invention relates to the field of renewable energy sources, namely to wave energy.

The device, according to the present invention, is intended for sea wave energy conversion into other forms of energy, preferably into electrical energy.

It is known a wave energy conversion device called "Pelamis", consisting of movably connected cylindrical sections with built-in hydraulic cylinders, hydraulic motors and electric generators. Under the influence of waves sections move between each other, actuating the hydraulic cylinders that pump oil through hydraulic motors to drive the electric generators. [1]

The disadvantages of this device are the possibility to work effectively only in a wavelength range comparable to the length of one section of the device, as well as the reduced efficiency due to the effects of wave motion on the device only from below.

It is also known a wave energy conversion device called "Wave Carpet", consisting of a frame, placed on the seabed, with mounted thereon hydraulic cylinders and a special flexible cover, perceiving the wave motion energy and transmitting it to the cylinders, creating a movement of the working fluid to rotate the shaft of the hydraulic turbine. [2]

The disadvantages of this device are that the device is placed at a large distance from the wave surface, which reduces the wave action energy and the reduced efficiency due to use of only part of the wave motion, acting on the device only from above.

A further example of a wave energy conversion device is known from US 4 036 563.

The technical problem solved by the proposed invention is to remove these disadvantages by implementing the device, effectively utilizing the wave motion energy and also extending the usable wave working range.

The solution of this problem is achieved by the use of the flexible structure of the underwater device, which under the influence of the motion of waves self-adjusts to their profile, length and amplitude, executes undulations simultaneously and together with them, and converts these motions into working fluid flow pressure with its subsequent conversion into electric energy.

The wave energy conversion device, according to the present invention, consists of two parallel blades, each of which is composed of a series of identical pivotally interconnected links, wherein at one end the blades are rigidly fixed together and along the length of the remaining portion are interconnected, with the possibility of mutual displacement in the longitudinal direction, by means of identical parallel hinge posts, and also consists of hydraulic cylinders or rotary hydraulic motors, a pressure pipeline, a supply pipeline, a hydraulic turbine or hydraulic motor, connected into a common circuit and an armature, floats and an electric generator.

The technical result of the proposed invention is to increase the energy conversion efficiency and to expand the usable wave working range.

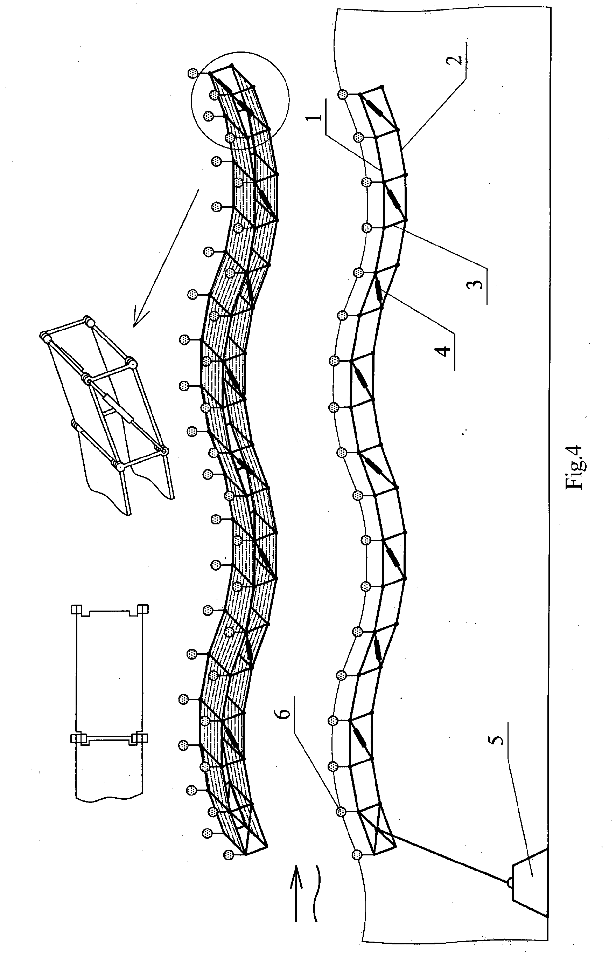

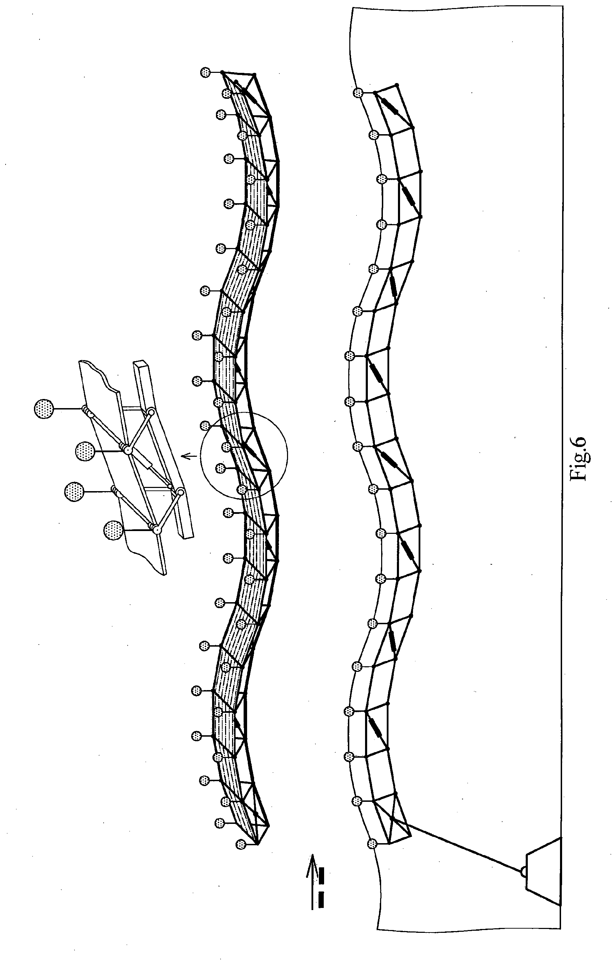

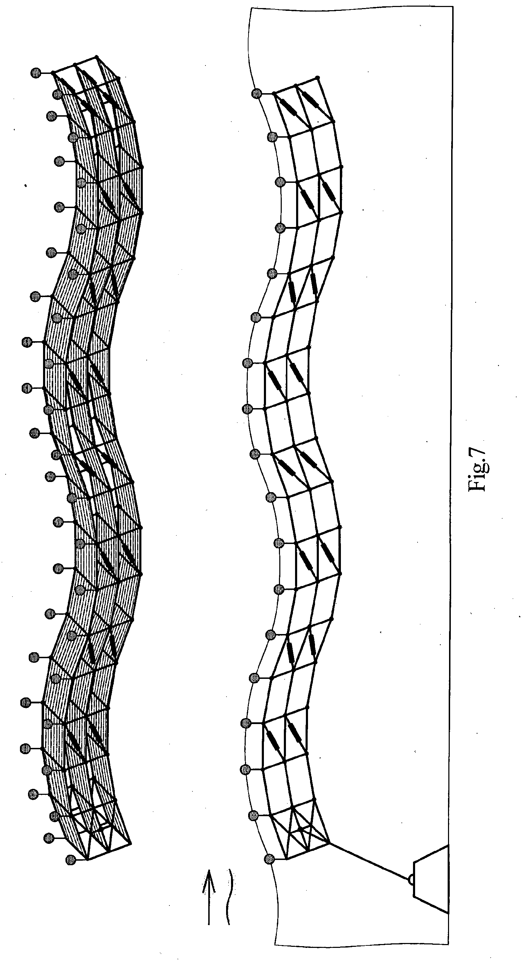

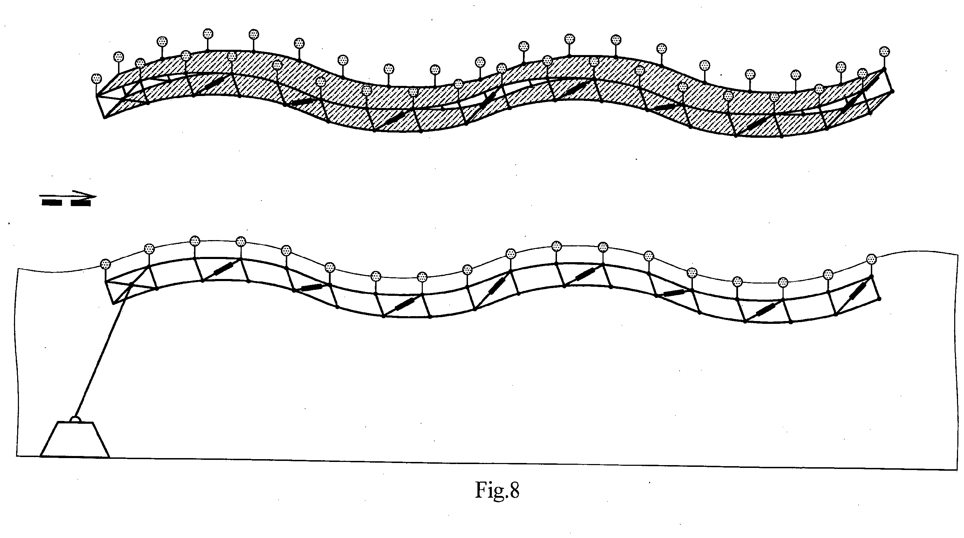

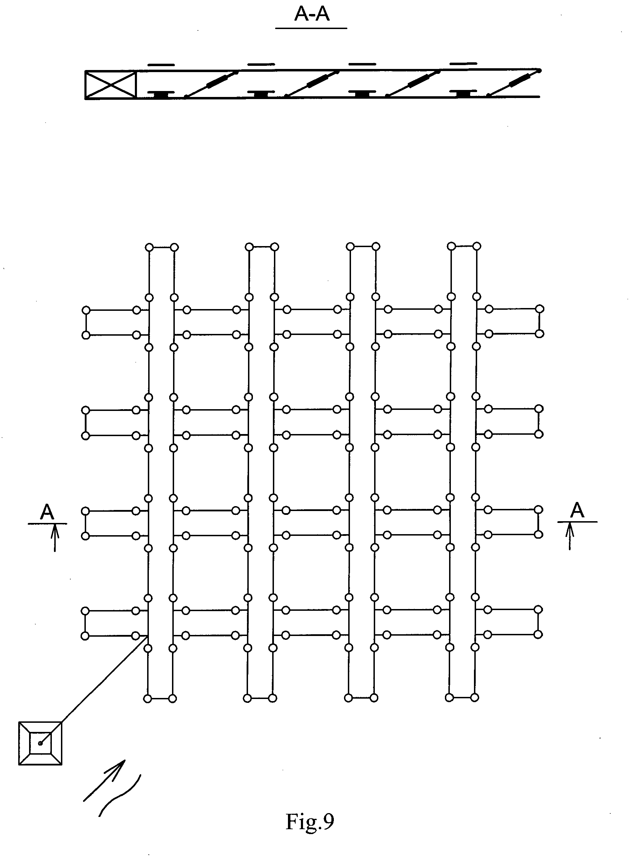

The wave energy conversion device is shown in FIG. 1-9:
FIG. 1 - structural diagram of the device;
FIG. 2 - device with hydraulic cylinders;
FIG. 3 - device with rotary hydraulic motors;
FIG. 4 - device with two blades;
FIG. 5a - circuit of vector components of water orbital motion in the wave;
FIG. 5b - circuit of water orbital motion vector components impact on the device;
FIG. 6 - device with a single blade;
FIG. 7 - device with three or more blades;
FIG. 8 - device with flexible blades;
FIG. 9 - design with multiple devices, connected to the general network.

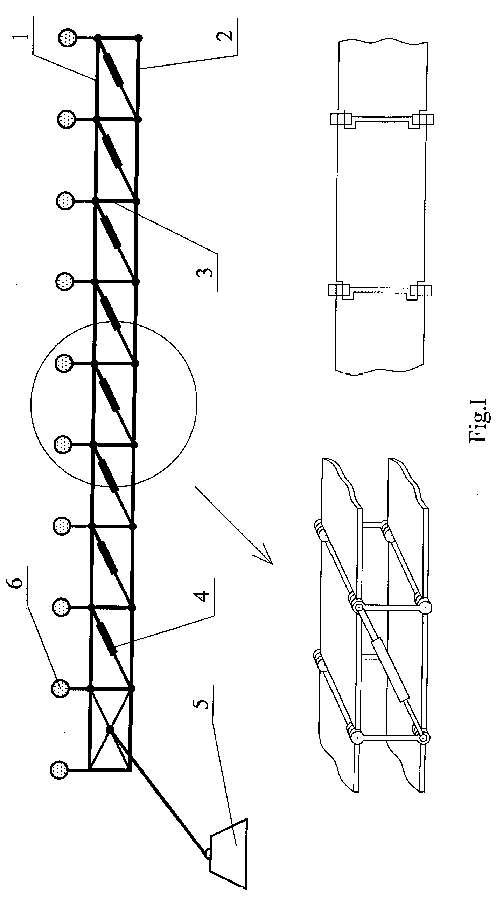

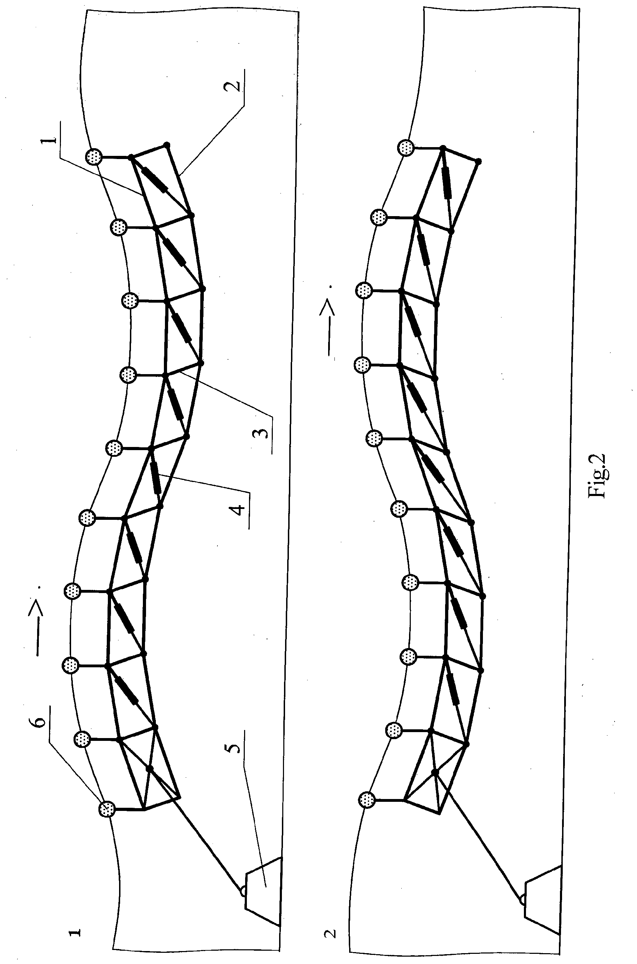

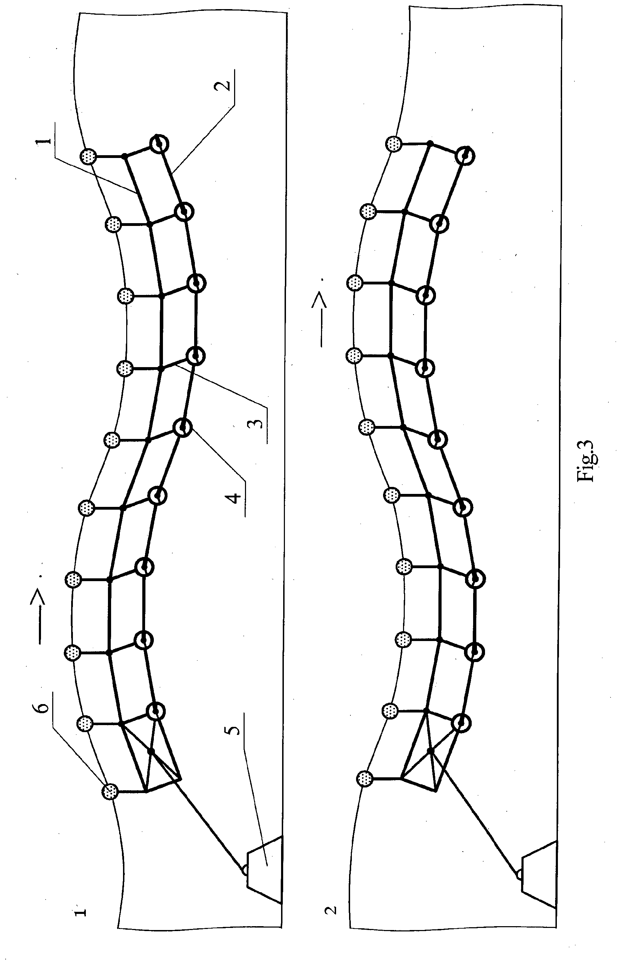

The wave energy conversion device consists of two parallel upper 1 and lower 2 blades, each of which is composed of a series of identical pivotally connected links, wherein at one end the blades are rigidly fixed together, and along the length of the remaining portion are interconnected, with the possibility of mutual displacement in the longitudinal direction, by means of identical parallel hinge posts 3 (FIG. 1), as well as consists of fixed on the blades 1, 2 and posts 3 hydraulic cylinders (FIG. 2) or rotary hydraulic motors 4 (FIG. 3), which are connected into a common circuit with a pressure pipeline, a supply pipeline, a hydraulic turbine or hydraulic motor (not shown) and an armature 5, floats 6 and an electric generator (not shown).

The device works as follows: Before starting the operation, the device consisting of two blades 1, 2 and posts 3 with the fixed thereon hydraulic cylinders or rotary hydraulic motors 4, by means of the armature 5 and the floats 6, is installed at a certain depth under the water, in the direction of wave propagation. After filling the hydraulic cylinders or hydraulic motors 4, and the connected to them in a common circuit pressure pipeline, supply pipeline and hydraulic turbine or hydraulic motor with working fluid, the device is ready for use.

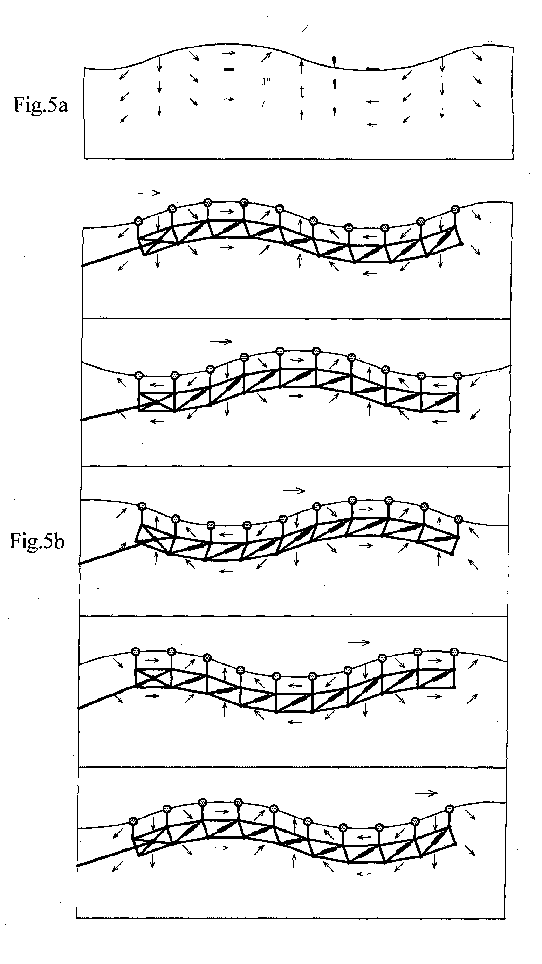

From the theory of wave movement it is well known that water particles in a wave are moving on an orbit, whose radius is equal to half the height of the wave, and making during one wave period a revolution, return in the initial position. The graphic representation of the vector components of orbital motion of water particles in a wave is shown in FIG. 5a and the individual positions of the moving parts of the device, within one wave length, are shown in FIG. 5b. During wave motion, under the influence of water particle motion on the blades 1 and 2, the device is in motion, i.e. is bent by copying the wave profile, thus executing undulations jointly and simultaneously with them, while during the linear displacement of each wave, the devices moves from one position to another and returns back, thus performing one working cycle (FIG. 2; FIG. 3), during which the cyclic variation of the angles between the blades 1, 2 and the posts 3 and the relative displacement between each other of blades 1 and 2 occurs, as a result of which the linear displacement of pins in the hydraulic cylinders or the angular displacement of shafts in the rotary hydraulic motors 4, which in turn push the working fluid through the pressure pipeline in the direction of hydraulic turbine or hydraulic motor, rotating its shaft and connected thereto the rotor of the electric generator, thus converting the mechanical work of cylinders or rotary hydraulic motors and the rotation of electric generator rotor into electric energy.

### Information sources:

1. https://en.wikipedia.org/wiki/Pelamis_Wave_Energy_Converter
2. Patent WO2014176293 A2 2014-10-30

**Patent Attorney Leonid Cotruta**

## Claims

1. A wave energy conversion device comprising:
- a first blade (1),
- a second blade (2) arranged under the first blade (1), parallel to the fist blade (1); one end of the first blade and second blade being rigidly fixed together;
- a plurality of posts (3) arranged parallel each others and connected to the first blade (1) and second blade (2) by means of hinges, so that a quadrilateral is formed between two posts and two sections of the first and second blades between the two posts;
- floats (6) connected to the hinges on the side of first blade (1), so that the first blade (1) is arranged horizontally, substantially parallel to a water surface;
- an armature (5) intended to be fixed; the armature (5) being connected to the one end of the first blade and second blade which is rigidly fixed together, so that the device is installed at a certain depth under the water, in the direction of wave propagation,
- hydraulic cylinders (4) or rotary hydraulic motors (4), wherein when there are the hydraulic cylinders (4), each hydraulic cylinder (4) is arranged between a hinge on the first blade (1) and a hinge on the second blade (2), in diagonal with respect to the quadrilateral formed between two posts and two sections of the first and second blades between the two posts; and when there are rotary hydraulic motors (4), each rotary hydraulic motors (4) is arranged in a hinge on the side of second blade (2);
- a pressure pipeline and a supply pipeline connected to the hydraulic cylinders (4) or first rotary hydraulic motors (4);
- a hydraulic turbine or a main hydraulic motor connected to said pressure pipeline;
- an electric generator connected to said hydraulic turbine or a main hydraulic motor.

2. Device of claim 1, wherein said first blade (1) comprises a plurality of links arranged in series and connected each others by means of the hinges of the posts.

3. Device of claim 2, wherein said links of the first blade (1) are plates.

4. Device of any one of the preceding claims, wherein said second blade (2) comprises a plurality of links arranged in series and connected each others by means of hinges of the posts.

5. Device of claim 1, wherein both the first blade (1) and the second blade (2) are made flexible, of one piece.

6. Device of anyone of the preceding claims, comprising at least three blades.

## Patentansprüche

1. Wellenenergieumwandlungseinrichtung, umfassend:
- ein erstes Blatt (1),
- ein zweites Blatt (2), das unter dem ersten Blatt (1), parallel zu dem ersten Blatt (1) angeordnet ist; wobei ein Ende des ersten Blattes und des zweiten Blattes starr aneinander befestigt sind;
- eine Mehrzahl von Pfosten (3), die zueinander parallel angeordnet und mit dem ersten Blatt (1) und dem zweiten Blatt (2) mittels Gelenken verbunden ist, so dass ein Viereck zwischen zwei Pfosten und zwei Abschnitten des ersten und des zweiten Blattes zwischen den beiden Pfosten gebildet wird;
- Schwimmkörper (6), die mit den Gelenken auf der Seite des ersten Blattes (1) verbunden sind, so dass das erste Blatt (1) horizontal, im Wesentlichen parallel zu einer Wasseroberfläche angeordnet ist;
- einen Anker (5), der dazu bestimmt ist, befestigt zu werden; wobei der Anker (5) mit dem einen Ende des ersten Blattes und des zweiten Blattes verbunden ist, das starr miteinander befestigt ist, so dass die Einrichtung in einer bestimmten Tiefe unter Wasser in der Richtung der Wellenausbreitung installiert ist,
- Hydraulikzylinder (4) oder hydraulische Drehmotoren (4), wobei, wenn Hydraulikzylinder (4) vorhanden sind, jeder Hydraulikzylinder (4) zwischen einem Gelenk auf dem ersten Blatt (1) und einem Gelenk auf dem zweiten Blatt (2), diagonal in Bezug auf das zwischen zwei Pfosten und zwei Abschnitten des ersten und des zweiten Blattes zwischen den beiden Pfosten gebildete Viereck angeordnet ist; und wobei, wenn hydraulische Drehmotoren (4) vorhanden sind, jeder hydraulische Drehmotor (4) in einem Gelenk auf der Seite des zweiten Blattes (2) angeordnet ist;
- eine Druckleitung und eine Versorgungsleitung, die mit den Hydraulikzylindern (4) oder den ersten hydraulischen Drehmotoren (4) verbunden sind;
- eine Hydraulikturbine oder einen Haupt-Hydraulikmotor, der mit der Druckleitung verbunden ist; einen Elektrogenerator, der mit der Hydraulikturbine oder einem Haupt-Hydraulikmotor verbunden ist.

2. Einrichtung nach Anspruch 1, wobei das erste Blatt (1) eine Mehrzahl von hintereinander angeordneten und mittels der Gelenke der Pfosten miteinander verbundenen Verbindungen umfasst.

3. Einrichtung nach Anspruch 2, wobei die Verbindungen des ersten Blattes (1) Platten sind.

4. Einrichtung nach einem der vorstehenden Ansprüche, wobei das zweite Blatt (2) eine Mehrzahl von hintereinander angeordneten und mittels der Gelenke der Pfosten miteinander verbundenen Verbindungen umfasst.

5. Einrichtung nach Anspruch 1, wobei sowohl das erste Blatt (1) als auch das zweite Blatt (2) einstückig flexibel sind.

6. Einrichtung nach einem der vorstehenden Ansprüche, umfassend wenigstens drei Blätter.

## Revendications

1. Dispositif de conversion énergétique des vagues
- une première lame (1)
- une seconde lame (2) disposée sous la première lame (1), parallèle à la première lame (1) ; une extrémité de la première et de la seconde lame étant rigidement fixées l'une à l'autre ;
- une pluralité de montants (3) disposés parallèlement l'un l'autre et reliés à la première lame (1) et à la seconde lame (2) moyennant des charnières, de sorte qu'un quadrilatère se forme entre deux montants et deux sections de la première et de la seconde lames entre deux montants ;
- des flotteurs (6) reliés aux charnières sur le côté de la première lame (1), de sorte que la première lame (1) est disposée horizontalement, pratiquement parallèle à une surface d'eau ;
- une armature (5) apte à être fixée ; l'armature (5) étant reliée à une extrémité de la première lame et de la seconde lame qui sont rigidement fixées l'une à l'autre,
de sorte que le dispositif est installé à une certaine profondeur sous l'eau, dans la direction de propagation des vagues,
- des vérins hydrauliques (4) ou des moteurs hydrauliques rotatifs (4), où lorsque ce sont des vérins hydrauliques (4), chaque vérin hydraulique (4) est disposé entre une charnière sur la première lame (1) et une charnière sur la seconde lame (2), en diagonale par rapport au quadrilatère formé entre deux montants et deux sections de la première et de la seconde lames entre deux montants ; et lorsque ce sont des moteurs hydrauliques rotatifs (4), chaque moteur hydraulique rotatif (4) est disposé dans une charnière sur le côté de la seconde lame (2) ;
- une conduite de pression et une conduite d'alimentation reliées aux vérins hydrauliques (4) ou aux premiers moteurs hydrauliques rotatifs (4) ;
- une turbine hydraulique ou un moteur hydraulique principal relié à ladite conduite de pression ;
- un générateur électrique relié à ladite turbine hydraulique ou à un moteur hydraulique principal.

2. Dispositif selon la revendication 1, où ladite première lame (1) comprend une pluralité de maillons disposés en série et reliés les uns aux autres moyennant les charnières des montants.

3. Dispositif selon la revendication 2, où lesdits maillons de la première lame (1) sont des plaques.

4. Dispositif selon l'une quelconque des revendications précédentes, où ladite seconde lame (2) comprend une pluralité de maillons disposés en série et reliés les uns aux autres moyennant les charnières des montants.

5. Dispositif selon la revendication 1, où tant la première lame (1) que la seconde lame (2) sont réalisées en matériau flexible, en une seule pièce.

6. Dispositif selon l'une quelconque des revendications précédents, comprenant au moins trois lames.
